Europäisches Patentamt

European Patent Office

Office européen des brevets

(19)

(11) Veröffentlichungsnummer: **0 264 073 B1**

# (12) EUROPÄISCHE PATENTSCHRIFT

(45) Veröffentlichungstag der Patentschrift: 27.12.91

(21) Anmeldenummer: 87114731.0

(22) Anmeldetag: 08.10.87

Teilanmeldung 90113939.4 eingereicht am 08/10/87.

(51) Int. Cl.⁵: **B29C 53/58**, B29C 53/80, B29C 65/62

(54) **Hochtemperaturschlauch.**

(30) Priorität: 09.10.86 DE 3634411
07.07.87 DE 3722393

(43) Veröffentlichungstag der Anmeldung:
20.04.88 Patentblatt 88/16

(45) Bekanntmachung des Hinweises auf die Patenterteilung:
27.12.91 Patentblatt 91/52

(84) Benannte Vertragsstaaten:
AT BE CH DE ES FR GB GR IT LI LU NL SE

(56) Entgegenhaltungen:
EP-A- 0 114 613          DE-A- 1 964 142
DE-C- 2 948 031          FR-A- 1 140 187
FR-A- 1 298 102          FR-A- 2 157 075
FR-A- 2 269 417          FR-A- 2 301 370
FR-A- 2 504 450          GB-A- 1 108 122
US-A- 2 640 500          US-A- 3 554 237
US-A- 4 413 580

(73) Patentinhaber: **TAL-Lufttechnik GmbH**
**Talstrasse 20**
**W-7700 Singen 15(DE)**

(72) Erfinder: **Klaus,Erich, Dipl.Ing.**
**Im Mettental 4**
**W-7761 Moos 4(DE)**

(74) Vertreter: **Weiss, Peter, Dr. rer.nat.**
**Patentanwalt Dr. Peter H. Weiss Postfach 12**
**50 Zeppelinstrasse 4**
**W-7707 Engen(DE)**

## Beschreibung

Die Erfindung betrifft einen Hochtemperaturschlauch aus einer Materialbahn, welche wendelförmig in sich selbst gewunden und vernäht ist, wobei die Materialbahn aus zumindest einer äußeren und einer inneren Lage besteht.

Derartige Schläuche finden in vielen Bereichen der Industrie Anwendung, beispielsweise als Filterschläuche in Entstaubungsanlagen oder als Hochtemperaturschläuche in Einrichtungen zum Absaugen von Abgasen od. dgl.. Diese Abgase weisen oftmals recht hohe Temperaturen auf, so daß an die Temperaturbeständigkeit des Schlauches erhebliche Anforderungen gestellt werden müssen.

Üblicherweise besteht der für einen derartigen Hochtemperaturschlauch verwendete Materialstreifen aus PVC, das jedoch Temperaturen nur bis zu einem bestimmten Bereich unbeschadet übersteht. Auch der Scheuerstreifen selbst, der dem Schutz der in sich gewundenen Materialbahn dient, wird üblicherweise aus PVC hergestellt und unterliegt infolgedessen beim Gebrauch des Schlauches einem recht hohen Verschleiß.

Aus der US-A-3 554 237 ist ferner ein Schlauch bekannt, welcher aus zwei Schichten besteht. Die innere Schicht besteht dabei aus einem Polyurethan-Schaum, der beidseitig mit wärmereflektierendem Material belegt ist. Die äußere Lage besteht aus einem entsprechenden flexiblen Streifen. Insbesondere durch die Einlagerung des Polyurethan-Schaumes wird jedoch der gesamte Schlauch sehr dickwandig und unflexibel.

Aus der FR-A 2 301 370 ist ferner ein Schlauch bekannt, der aus einer inneren Lage aus Glasgewebe besteht, welche mit plastischem oder elastomerem Material oder mit Silikon oder einer dünnen Aluminiumfolie belegt ist. Dies allein genügt aber nicht, um die entsprechende Dichtigkeit des Glasfasergewebes auch bei höheren Temperaturen beizubehalten. Bei höheren Temperaturen schmilzt das Kunststoffmaterial bzw. das Silikon. Die Aluminiumschicht ist wiederum einem hohen Verschleiß von außer her ausgesetzt.

Der Erfinder hat sich zum Ziel gesetzt, Schläuche zu entwickeln, welche unterschiedlichen Temperaturen standhalten und wenig verschleißanfällig sind.

Zur Lösung dieser Aufgabe führt ein Hochtemperaturschlauch gemäß dem kennzeichnenden Teil von Anspruch 1. Dieser Hochtemperaturschlauch hält einer Temperatur von etwa 180° C stand. Zusätzlich kann die innere Lage noch aluminiumkaschiert oder mit Aluminium bestrichen sein.

Temperaturen bis etwa 300° C hält dagegen ein Hochtemperaturschlauch aus, dessen innere Lage aus einem Glasfasergewebe besteht, welches ggfs. mit PTFE beschichtet oder aluminisiert ist.

Die äußere Lage ist dann aus einem vitonbeschichteten Glasfasergewebe hergestellt.

Für Temperaturen bis 600° C sollte dagegen die innere Lage aus einem Gewebe aus Glas-Silizium($SiO_2$)-Fasern bestehen, während die äußere Lage ein vitonbeschichtetes Glasfasergewebe ist.

Auch der Nähfaden muß den unterschiedlichen Temperaturanforderungen Rechnung tragen. Bevorzugt werden bei Temperaturen über 180° C Nähfäden verwendet, die aus einem speziellen Stahl hergestellt sind. Im Rahmen der Erfindung ist beispielsweise auch an mit Teflon beschichtete Siliziumfäden gedacht.

Eine Verbesserung der Erfindung liegt auch in der Anordnung und der besonderen Materialwahl für einen Scheuerstreifen. Hier hat sich NomexPapier, das ist Papier aus Flocken und Fasern eines hochtemperaturbeständigen Polymers, insbesondere eines aromatischen Polyamids, des Aramids, als besonders geeignet herausgestellt.

Auf diese erfindungsgemäße Weise lassen sich Schläuche von einem Durchmesser von 100 mm bis 800 mm Durchmesser herstellen, bei denen die Scheuerstreifen statt wie bisher in einem Abstand von 8 cm nur noch in einem Abstand von 4,5 cm gewickelt sind.

Da hierdurch auch die Drahtwicklung enger wird, wirkt sich dies günstig auch die Druckfestigkeit der Schläuche aus.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1    eine perspektivische Ansicht eines erfindungsgemäßen Schlauches;

Figur 2    einen vergrößert dargestellten Querschnitt durch den Schichtaufbau des Schlauches nach Figur 1.

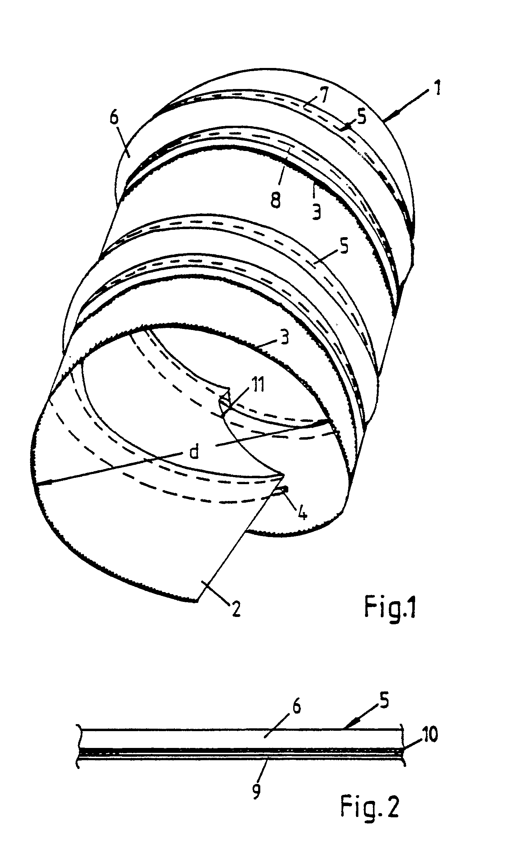

Ein Schlauch 1, insbesondere ein Filter- oder Hochtemperaturschlauch, besteht gemäß Figur 1 aus einer wendelförmig ineinander gewundenen Materialbahn 2, die randseitig mit einem Saum 3 belegt ist.

Zwischen die wendelförmig ineinander gewundene Materialbahn 2 ist ein ebenfalls wendelförmig gewundener Draht 4 eingelegt, der an der Außenfläche der Materialbahn von einem Scheuerstreifen 5 begleitet wird. Hierzu ist an dem Scheuerstreifen 5 eine kanalartige Wölbung 6 ausgebildet und beidseits eine Naht 7 bzw. 8 zum Verbinden mit dem Schlauch 1 vorgesehen.

Soll nur ein Filterschlauch hergestellt werden, so besteht die Materialbahn 2 aus einem herkömmlichen Filtergewebe, welches je nach Anforderungen wechseln kann. Bei einem Hochtemperaturschlauch soll die Materialbahn 2 im gezeigten Ausführungsbeispiel dagegen zweilagig sein, wobei sich das Material der Lagen je nach zu ertragenden Temperaturen unterscheidet.

Für einen sogenannten 180°C-Schlauch besteht die innere Lage 9 aus einem Glasgewebe, welches bevorzugt zusätzlich aluminiumkaschiert bzw. mit Aluminium bestrichen ist.

Die äußere Lage 10 besteht aus einem neoprenbeschichteten Gewebe. In diesem Temperaturbereich besteht der Scheuerstreifen aus Polyäthylen und ist daher temperaturbeständiger als PVC. Sollte es infolge hoher Temperaturen zu einem Schmelzen des Scheuerstreifens kommen, so entstehen beim Polyäthylen keine giftigen Dämpfe.

Bei einem Hochtemperaturschlauch für etwa 300°C kann die innere Lage 9 ebenfalls aus einem Glasgewebe bestehen oder beispielsweise aus einem mit PTFE (Teflon) beschichteten Glasgewebe. Für die äußere Lage 10 wird ein Glasgewebe verwendet, welches vitonbeschichtet ist.

Für Temperaturen von 550°C bis 600°C wird für die innere Lage 9 bevorzugt ein Gewebe aus Glas-Silizium-Fäden verwendet, die äußere Lage 10 besteht wiederum aus vitonbeschichtetem Glasgewebe. Selbstverständlich ist es auch möglich, wenn gewünscht, die Materialbahn 2 aus mehr als zwei Lagen zu bilden.

Als Fäden für die Naht 7 und 8 bis 400°C können beispielsweise Nomex-Fäden Anwendung finden, bei höheren Temperaturen werden die Fäden aus Stahl oder mit Teflon beschichtetem Glas-Silizium benutzt.

Die Scheuerstreifen 5 bestehen in diesem Temperaturbereich aus Nomex-Papier, welches beispielsweise aus Aramidfasern oder -flocken hergestellt ist.

## Patentansprüche

1. Hochtemperaturschlauch aus einer Materialbahn, welche wendelförmig in sich selbst gewunden und vernäht ist, wobei die Materialbahn (2) aus zumindest einer äußeren und einer inneren Lage (9,10) besteht,

   dadurch gekennzeichnet,

   daß die äußere Lage (10) aus einem neoprenbeschichteten Gewebe und die innere Lage (9) aus einem Glasfasergewebe besteht, welch letztere ggfs. mit Aluminium kaschiert oder bestrichen ist.

2. Hochtemperaturschlauch aus einer Materialbahn, welche wendelförmig in sich selbst gewunden und vernäht ist, wobei die Materialbahn (2) aus zumindest einer äußeren und einer inneren Lage (9,10) besteht, dadurch gekennzeichnet, daß die innere Lage (9) aus einem Glasfasergewebe, ggfs. mit Aluminium kaschiert oder bestrichen, und die äußere Lage (10) aus einem vitonbeschichteten Glasfasergewebe besteht.

3. Hochtemperaturschlauch aus einer Materialbahn, welche wendelförmig in sich selbst gewunden und vernäht ist, wobei die Materialbahn (2) aus zumindest einer äußeren und einer inneren Lage (9,10) besteht, dadurch gekennzeichnet, daß die innere Lage (9) aus einem mit PTFE (Teflon) beschichteten Glasfasergewebe besteht und die äußere Lage (10) aus einem vitonbeschichteten Glasfasergewebe.

4. Hochtemperaturschlauch aus einer Materialbahn, welche wendelförmig in sich selbst gewunden und vernäht ist, wobei die Materialbahn (2) aus zumindest einer äußeren und einer inneren Lage (9,10) besteht, dadurch gekennzeichnet, daß die innere Lage (9) aus einem Gewebe aus Glas-Silizium-Fasern und die äußere Lage (10) aus einem vitonbeschichteten Glasfasergewebe besteht.

5. Hochtemperaturschlauch nach wenigstens einem der Ansprüche 1 bis 4, dadurch gekennzeichnet, daß der Nähfaden für die Naht (7,8) ein Stahl-Faden oder ein mit Teflon beschichteter Silizium-Faden ist.

6. Hochtemperaturschlauch nach wenigstens einem der Ansprüche 1 bis 5, dadurch gekennzeichnet, daß die Materialbahn (2) von einem Scheuerstreifen (5) umgeben ist und der Scheuerstreifen (5) aus einem Nomex-Papier besteht.

## Claims

1. High-temperature hose from a web of material which is wound helically into itself and is sewn up, the web of material (2) consisting of at least one outer and one inner layer (9, 10), characterised in that the outer layer (10) consists of a neoprene-coated fabric and the inner layer (9) of a glassfibre fabric, the latter optionally being bonded or coated with aluminium.

2. High-temperature hose from a web of material which is wound helically into itself and is sewn up, the web of material (2) consisting of at least one outer and one inner layer (9, 10), characterised in that the inner layer (9) consists of a glassfibre fabric, optionally bonded or coated with aluminium, and the outer layer (10) consists of a Viton-coated glassfibre fabric.

3. High-temperature hose from a web of material which is wound helically into itself and is sewn up, the web of material (2) consisting of at least one outer and one inner layer (9, 10), characterised in that the inner layer (9) consists of a PTFE (Teflon)-coated glassfibre fabric and the outer layer (10) of a Viton-coated glassfibre fabric.

4. High-temperature hose from a web of material which is wound helically into itself and is sewn up, the web of material (2) consisting of at least one outer and one inner layer (9, 10), characterised in that the inner layer (9) consists of a fabric of glass silicon fibres and the outer layer (10) consists of a Viton-coated glass fibre fabric.

5. High-temperature hose according to at least one of claims 1 to 4, characterised in that the sewing thread for the seam (7, 8) is a steel thread or a Teflon-coated silicon thread.

6. High-temperature hose according to at least one of claims 1 to 5, characterised in that the web of material (2) is surrounded by an abrasion strip (5) and the abrasion strip (5) consists of a Nomex paper.

**Revendications**

1. Tubes résistant à de hautes températures réalisés à partir d'une bande de matériau enroulée sur elle-même en forme de spirale et cousue, la bande de matériau (2) étant constituée d'au moins d'une couche extérieure (10) et d'une couche intérieure (9), caractérisé en ce que la couche extérieure (10) est constituée de tissu de couches de néoprène et la couche intérieure (9) par un tissu de fibre de verre, doublé ou enduit le cas échéant d'aluminium.

2. Tubes résistant à de hautes températures réalisés à partir d'une bande de matériau enroulée sur elle-même en forme de spirale et cousue, la bande de matériau (2) étant constituée d'au moins d'une couche extérieure (10) et d'une couche intérieure (9), caractérisé en ce que la couche intérieure (9) est constituée de tissu de fibre de verre, doublé ou enduit le cas échéant par de l'aluminium, et que la couche extérieure (10) est constituée de tissu de fibre de verre revêtu d'une couche de viton.

3. Tubes résistant à de hautes températures réalisés à partir d'une bande de matériau enroulée sur elle-même en forme de spirale et cousue, la bande de matériau (2) étant constituée d'au moins d'une couche extérieure (10) et d'une couche intérieure (9), caractérisé en ce que la couche intérieure (9) est constituée d'un tissu de verre recouvert d'une couche de PTFE (téflon) et que la couche extérieure (10) est constituée de tissu de verre recouvert d'une couche de viton.

4. Tubes résistant à de hautes températures réalisés à partir d'une bande de matériau enroulée sur elle-même en forme de spirale et cousue, constituée d'au moins d'une couche extérieure (10) et d'une couche intérieure (9), caractérisé en ce que la couche intérieure (9) est constituée de tissu de fibres verre-silice, et que la couche extérieure (10) est constituée de tissu de fibre de verre recouvert d'une couche de viton.

5. Tubes résistant à de hautes températures selon l'une quelconque des revendications 1 à 4, caractérisé en ce que le fil de couture pour les coutures (7, 8) est un fil d'acier ou un fil de silice recouvert d'une couche de téflon.

6. Tubes résistant à de hautes températures selon l'une quelconque des revendications 1 à 5, caractérisé en ce que la bande de matériau (2) est entourée par une bande de protection (5) et que la bande de protection (5) est constituée de papier Nomex.

Fig.1

Fig.2